(19) **Europäisches Patentamt / European Patent Office / Office européen des brevets**

(11) **EP 2 926 252 B1**

(12) **EUROPEAN PATENT SPECIFICATION**

(45) Date of publication and mention of the grant of the patent:
**26.02.2020 Bulletin 2020/09**

(21) Application number: **12791487.7**

(22) Date of filing: **28.11.2012**

(51) Int Cl.:
*G06F 9/46* (2006.01)

(86) International application number:
**PCT/EP2012/073803**

(87) International publication number:
**WO 2014/082663 (05.06.2014 Gazette 2014/23)**

(54) **METHOD AND APPARATUS FOR MANAGING DISTRIBUTED TRANSACTIONS**

VERFAHREN UND VORRICHTUNG ZUR VERWALTUNG VON VERTEILTEN TRANSAKTIONEN

PROCÉDÉ ET APPAREIL POUR GÉRER DES TRANSACTIONS DISTRIBUÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.10.2015 Bulletin 2015/41**

(73) Proprietor: **Telefonaktiebolaget LM Ericsson (publ)**
**164 83 Stockholm (SE)**

(72) Inventor: **HOLLMANN, Mark**
**Athlone**
**Co. Westmeath (IE)**

(74) Representative: **Brann AB**
**P.O. Box 3690**
**Drottninggatan 27**
**103 59 Stockholm (SE)**

(56) References cited:
**GB-A- 2 335 516      US-A- 5 432 926**
**US-A1- 2009 292 744**

EP 2 926 252 B1

**Description**

Technical Field

The present invention relates to the management of distributed transactions, and particularly but not exclusively to a method and apparatus for minimizing the probability of a distributed transaction having a heuristic-mixed outcome.

Background

A transaction comprises a unit of work performed within a system against one or more transactional resources. Four key properties of a transaction are:

1) Atomic i.e. the transaction must either be fully completed or fully rolled back with no effect whatsoever.
2) Consistent i.e. results must conform to existing constraints in the system
3) Isolated i.e. different transactions must be isolated from one another.
4) Durable i.e. transactions that are successfully completed must be written into durable storage.

The above four properties are commonly known as the ACID properties of a transaction.

A transaction generally initiated when a business or other process wishes to manipulate the state of the system. Once initiated, the transaction is controlled by a transaction manager (also known as a "transaction coordinator"), which oversees and coordinates the implementation of the state manipulation operations on each participating transactional resource.

A simple transaction may consist of one or more operations which manipulate the state of a single transactional resource. A typical algorithm for carrying out a simple transaction comprises the following steps:

1) Begin the transaction;
2) Execute a set of state manipulation operations against the transactional resource;
3) Check if errors have occurred and end the transaction accordingly.

If no errors have occurred during the execution of the transaction then step (3) comprises committing to the transaction. The transaction commit operation applies all data manipulations within the scope of the transaction and makes the changes durable (also known as "persistent"). If, however, one or more errors have occurred during the execution of the transaction then instead of committing to the transaction, step (3) comprises the step of rolling back the transaction. If the transaction rollback operation is performed then the state manipulations of step (2) are not made durable; the transaction rollback operation returns the system to the state that it was in before the transaction was initiated i.e. before step (1) was executed. Once the system has been returned to its initial state, transaction manager may initiate further attempts to complete the transaction.

In both of the above-described cases the system remains consistent: the transaction is either fully executed or is fully purged with no effect whatsoever, thereby conforming to the above-described ACID properties of a transaction. However, a problem arises if the transaction manager has chosen to rollback the transaction but an internal fault during the rollback operation forces the transactional resource to perform a commit operation as opposed to the expected rollback operation. In this case, the transactional resource is said to have made a heuristic decision to commit (also known as a "heuristic commit"). As a result of a heuristic decision to commit, changes are made durable which should not have been. This is highly likely to leave the system in an inconsistent state, thereby violating the ACID properties of a transaction.

In reality, the occurrences of heuristic commits are rare. Furthermore, the reverse situation (in which the transaction manager has chosen to commit the transaction but an internal fault during the commit operation forces the transactional resource to perform a heuristic rollback operation) is not a problem for a simple transaction (only one transactional resource) since the system is left in a consistent state afterwards. Accordingly, the above-described procedure of transaction handling functions effectively for the majority of simple transactions. However, if a transaction requires the manipulation of the state of more than one transactional resource (known as a "distributed transaction") then both heuristic commit decisions and heuristic rollback decisions can create significant problems.

Consider first the situation in which the transaction manager issues instructions to all participating transactional resources to rollback: if one transactional resource takes a heuristic commit decision but the other transactional resources rollback as instructed then the system will be left in an inconsistent state (known as a "heuristic mixed state"). This heuristic mixed state is in violation of the ACID principles of a transaction. The problems associated with a heuristic mixed state are simply illustrated by considering the example of a cash withdrawal from an automated teller machine (ATM): a first transactional resource must dispense the requested money whilst a second transactional resource must reduce the balance of the customer's account by the appropriate amount. If one resource commits and the other rolls back then the customer will either receive money for free or will be have their bank balance unduly reduced.

As discussed above, a heuristic decision to commit is rare and thus there is only a small probability that a heuristic mixed state will arise from a transactional resource taking a heuristic decision to commit. However, a heuristic mixed state will also result if the transactional manager chooses to commit to the transaction but an internal fault in the execution of the commit operation on a certain transactional resource forces that resource to take a heuristic decision to rollback. The probability of a transactional resource taking a heuristic decision to rollback is considerably greater than the probability of taking a heuristic decision to rollback and thus the probability of the system entering a heuristic mixed state is sufficiently high to be a serious concern.

In an attempt to solve the problem of a system entering a heuristic mixed state, the two-phase commit (2PC) protocol has been developed. This protocol includes a "prepare" phase in addition to a "commit" phase, as described in greater detail below:

1) Begin the transaction;
2) Execute a set of data manipulations against multiple transactional resources;
3) Ask every transactional resource to vote whether it is in a position to commit to the transaction (the "prepare phase");
4) Check whether all transactional resources have voted that they are in a position to commit and end the transaction accordingly: if all transactional resources have voted that they are in a position to commit, the transaction is ended with a commit; however if one or more transactional resources have voted that they are not in a position to commit then the transaction must be rolled back (the "commit" phase).

The two-phase protocol reduces the probability of the system entering a heuristic mixed state but does not fully alleviate the problem. In particular, the two-phase commit protocol has an inherent weakness: a transactional resource may have voted that it was in a position to commit during the prepare phase, but during the actual commit operation it may discover that it is unable to do so, and instead take a heuristic decision to rollback. Similarly, the resource may have been instructed to rollback (for example if had voted to rollback during the prepare phase or if another resource had voted to rollback), but during the actual rollback operation it takes a heuristic decision to commit.

The procedure to recover from a Heuristic-Mixed outcome of a transaction is to bring all of the transactional resources participating in the transaction into a consistent state again. This, however, suffers from a number of problems. Firstly, the original information about the changes that were to be made to the transactional resources is lost and cannot be re-constructed. In general, it is not possible to automatically bring the system into a consistent state again. Accordingly, the intervention of a human user is often required. The human user must re-construct the transaction and manually adjust the resources, which is time-consuming and disruptive to the system.

Even in the rare instances in which it would be possible to automatically bring the system into a consistent state again, the actual procedure to do this must itself run in a transaction. This new transaction is equally as likely as the fail as the original transaction, thereby further exacerbating the problem. Furthermore, the transactional resources affected by the failed original transaction may have been modified further by a separate unrelated transaction in the meantime, thereby making it impossible to bring the affected resource into a consistent state with the rest of the system. Again, human intervention is generally required in order to recover the system.

There are known documents related to two-phase commit protocol, namely US2009/292744, GB2335516, and US5432926. Particularly, US2009/292744 describes a method of managing distributed transactions for the in-doubt state in two-phase commit protocol of a distributed transaction system. The system comprises a priority definition file that defines priority of data storage devices having the management right. Further, GB2335516 describes a method for failure recovery in distributed transactions to avoid heuristic damage, where if a transaction remains in doubt for a period of time longer than a preset threshold, a system administrator of a server holding resource objects is given the authority to make a guess as to how the transaction will turn out. Furthermore, US5432926 describes a method for improving database reliability in a distributed transaction processing system, where a node after receiving a prepare to commit syncpoint command from a parent node, determines if the node or any of its descendant nodes can make a unilateral heuristic decision to commit or backout the transaction irrespective of whether or not a final syncpoint command is to commit or backout. However devices and operations as in the invention now to be described are neither disclosed nor suggested in these documents.

Summary

An object of the present invention is to provide management of distributed transactions by minimizing the probability of said transactions having a heuristic-mixed outcome. This is achieved by a method and an apparatus according to the independent claims. Further enhancements are characterized in the dependent claims.

The method may comprise sequentially instructing said plurality of transactional resources in accordance with the probability that the transactional resources will make a heuristic decision, with those network resources most likely to make a heuristic decision instructed to commit to the transaction or to rollback the transaction first and those network resources least likely to make a heuristic decision instructed to commit to the transaction or to rollback the transaction last.

One advantage of prioritizing those network resources that are most likely to make a heuristic decision is that the transaction may be terminated if any given resource makes a heuristic decision, thereby reducing the number of transactional resources that are adversely affected by the heuristic decision.

In the embodiment in which said step of assigning a priority value to each transactional resource belonging to said plurality of transactional resources comprises option (b1), The method may comprise calculating the probability that said transactional resource will make a heuristic decision.

The step of calculating the probability that said transactional resource will make a heuristic decision may comprise retrieving information regarding one or more previous transactions in which a heuristic decision was taken by said transactional resource. Alternatively, or in addition thereto, the step of calculating the probability that said transactional resource will make a heuristic decision may comprise retrieving information regarding one or more previous transactions implemented on said transactional resource, regardless of whether a heuristic decision was taken by said transactional resource.

In either case, the method may comprise the step of recording said information regarding previous transactions, this step being implemented following the termination of said previous transactions.

The step of calculating the probability that said transactional resource will make a heuristic decision may comprise analyzing said information regarding previous transactions and indentifying any trends therein.

Said information regarding previous transactions may comprise, for each previous transaction, information indicative of whether a heuristic decision was taken during said previous transaction.

Said information regarding previous transactions may further comprise, for each previous transaction, the time of said previous transaction. In this embodiment, the step of calculating the probability that said transactional resource will make a heuristic decision may comprise calculating the probability based at least partially on the time of said transaction and the times of previous transactions in which heuristic decisions were taken and/or not taken.

Alternatively, or in addition thereto, said information regarding previous transactions may further comprise, for each previous transaction, the size of said previous transaction. In this embodiment, the step of calculating the probability that said transactional resource will make a heuristic decision may comprise calculating the probability based at least partially on the size of said transaction and the sizes of previous transactions in which heuristic decisions were taken and/or not taken. Alternatively, or in addition thereto, said information regarding previous transactions may further comprise, for each previous transaction, the length of said previous transaction. In this embodiment, the step of calculating the probability that said transactional resource will make a heuristic decision may comprise calculating the probability based at least partially on the length of said transaction and the lengths of previous transactions in which heuristic decisions were taken and/or not taken.

Alternatively, or in addition thereto, said information regarding previous transactions may further comprise, for each previous transaction, the physical environment of said transactional resource during said previous transaction. In this embodiment, the step of calculating the probability that said transactional resource will make a heuristic decision may comprise calculating the probability based at least partially on the physical environment of said transactional resource at the time of said transaction and the physical environment of said transactional resource at the time of previous transactions in which heuristic decisions were taken and/or not taken.

Alternatively, or in addition thereto, said information regarding previous transactions may further comprise, for each previous transaction, the run-time environment of said transactional resource during said previous transaction. Said information regarding may comprise the CPU load and/or memory usage and/or file-system usage. In this embodiment, the step of calculating the probability that said transactional resource will make a heuristic decision may comprise calculating the probability based at least partially on the run-time environment of said transactional resource at the time of said transaction and the run-time environment of said transactional resource at the time of previous transactions in which heuristic decisions were taken and/or not taken. Alternatively, or in addition thereto, said information regarding previous transactions may further comprise, for each previous transaction, whether said previous transaction terminated with an instruction to commit or an instruction to rollback. In this embodiment, the step of calculating the probability that said transactional resource will make a heuristic decision may comprise calculating the probability based at least partially on whether said transaction is seeking to terminate with an instruction to commit or an instruction to rollback and whether previous transactions in which heuristic decisions were taken/not taken were terminated with instructions to commit or to rollback.

Alternatively, or in addition thereto, said information regarding previous transactions may further comprise, for each previous transaction in which a heuristic decision was taken, the stage of the transaction in which the heuristic decision was taken. For example, the heuristic decision may have been taken in the prepare phase of the two-phase protocol or the commit phase of the two-phase protocol. In this embodiment, the step of calculating the probability that said transactional resource will make a heuristic decision may comprise calculating the probability based at least partially on the stage of said transaction and the stages at which heuristic decisions were taken in previous transactions.

Said information regarding previous transactions may further comprise, for each previous transaction, an indication of the time that has elapsed since said previous transaction. The step of calculating the probability that said transactional resource will make a heuristic decision may comprise identifying any trends in the heuristic decision making of said transactional resource with time and extrapolating said trends.

Alternatively, or in addition thereto, the step of calculating the probability that said transactional resource will make a heuristic decision may comprise retrieving information regarding one or more previous transactions implemented on another transactional resource having at least one attribute in common with said transactional resource. Said attribute may comprise physical location, physical environment, hardware, software and/or functionality.

As an alternative to retrieving information regarding one or more previous transactions implemented on said transactional resource or another transactional resource, or in addition thereto, the step of calculating the probability that said transactional resource will make a heuristic decision may comprise retrieving information regarding future events and may further comprise calculating the probability that said transactional resource will make a heuristic decision at least partially based on said information regarding future events. Said information regarding future events may comprise information regarding events likely or certain to occur in the future and likely or certain to influence the probability that said transactional resource will make a heuristic decision. Said information regarding future events may comprise one or more of:

i. a planned outage of said transactional resource;
ii. a change to the physical environment of said transactional resource;
iii. a change to the execution environment of said transactional resource.

The step of calculating the probability that said transactional resource will make a heuristic decision may comprise calculating the probability that said transactional resource will make a heuristic decision based on both said information regarding prior behavior and said information regarding future events. The step of calculating the probability that said transactional resource will make a heuristic decision may comprise trend analysis. Alternatively, the step of calculating the probability that said transactional resource will make a heuristic decision may comprise pattern analysis.

In the embodiment in which the step of assigning a priority value to each transactional resource belonging to said group comprises option (b2), whether alone or in conjunction with option (b1), said step may comprise calculating the actual or perceived importance of implementing said transaction on said transactional resource.

The actual or perceived importance of implementing said transaction on said transactional resource may be calculated at least partially on the basis of a relative commercial or business importance, real or perceived, of said transactional resource. For example, a business may attach a high importance to customer care, in which case a customer care database will be of greater commercial or business importance than other resources. Accordingly, it may be particularly important to implement a particular transaction on the customer care database and thus this resource should be instructed first in the transaction.

Alternatively, or in addition thereto, the actual or perceived importance of implementing said transaction on said transactional resource may be calculated at least partially on the basis of the importance of implementing said transaction on said transactional resource to the network infrastructure. If, for example, said transactional resource is an important network infrastructure server then it may be particularly important to implement a given transaction on said transactional resource in order to ensure the network remains stable.

The actual or perceived importance of implementing said transaction on said transactional resource may be calculated at least partially on the basis of the identity of said transactional resource or the category of resource to which said transactional resource belongs. For example, the commercial and/or business importance a resource representing the account of an important customer is considerable and thus this resource should be prioritized.

Alternatively, or in addition thereto, the actual or perceived importance of implementing said transaction on said transactional resource may be calculated at least partially on the basis of the physical location of said transactional resource and/or the execution environment of said transactional resource.

The method may be implemented as part of a two-phase commit (2CP) protocol. In particular, the method may be implemented during the commit phase of a two-phase commit (2CP) protocol.

The method may be implemented on a transaction manager.

Also in accordance with the present invention, there is provided a transaction manager for managing a transaction implemented on a plurality of transactional resources, said transaction manager comprising a processor for identifying a plurality of transactional resources upon which said transaction is to be implemented, assigning a priority value to each transactional resource belonging to said plurality of transactional resources and sequentially instructing said plurality of transactional resources to either commit to the transaction or to rollback the transaction in an order that is dependent upon said priority values of said transactional resources.

Said transaction manager may form part of a Network Management System (NMS).

Said processor may comprise a hardware module for calculating, for each transactional resource, said priority value associated with said transactional resource.

Said processor may be adapted for running a process for calculating, for each transactional resource, said priority value associated with said transactional resource.

Said process may comprise calculating a probability that said transactional resource will make a heuristic decision.

Said transaction manager may comprise an input for retrieving information regarding previous transactions implemented on said transactional resource and providing said information to said processor for use in calculating the probability that said transactional resource will make a heuristic decision. Alternatively, or in addition thereto, the transaction manager may comprise an input for retrieving information regarding future events and providing said information to said processor for use in calculating the probability that said transactional resource will make a heuristic decision.

Said process may comprise a trend analysis algorithm and a pattern analysis algorithm, which may be adapted for analyzing trends or process. These algorithms may be adapted to interpret the previous behavior of said transactional resource or other transactional resources similar to said transactional resource.

Alternatively, or in addition thereto, said process may comprise calculating an actual or perceived importance of implementing said transaction on said transactional resource. Said transaction manager may comprise an input for retrieving information regarding the commercial and/or business importance of implementing said transaction on said transactional resource and providing said information to said processor for use in calculating the actual or perceived importance of implementing said transaction on said transactional resource. Alternatively, or in addition thereto, the transaction manager may comprise an input for retrieving information regarding the importance of implementing said transaction on said transactional resource to the overall functioning of the network and providing said information to said processor use in calculating the actual or perceived importance of implementing said transaction on said transactional resource.

Also in accordance with the present invention, there is provided a network comprising a plurality of network elements, each network element comprising a resource upon which a transaction may be implemented, the network further comprising a transaction manager for managing said transaction, said transaction manager being as hereinbefore described.

The network may comprise a memory, which may be disposed within said transaction manager. Said memory may be adapted for recording information regarding transactions implemented on a resource belonging to said plurality of resources, which may then be retrieved by said transaction manager and provided to said processor for use in calculating the probability that said transactional resource will make a heuristic decision. Said information may comprise one or more of:

> i. whether a heuristic decision was taken by said resource during said transaction;
> ii. the time of said transaction;
> iii. the size of said transaction;
> iv. the length of said transaction;
> v. whether said transaction terminated with instructions to commit or instructions to rollback;
> vi. the physical environment of said resource at the time of said transaction;
> vii. the run-time environment of said resource at the time of said transaction, for example the CPU load, memory usage, file-system usage.
> viii. if a heuristic decision was taken, the stage of the transaction at which said heuristic decision was taken, for example said decision may have been taken during the transaction, during the prepare phase, or during the commit phase;

Alternatively, or in addition thereto, said memory may be programmable such that a user may record said information regarding future events, which may be provided to said processor for use in calculating the probability that said transactional resource will make a heuristic decision. Said information regarding future events may comprise planned outages of said resources. Alternatively, or in addition thereto, said information regarding future events may comprise planned or predicted changes to the physical environment of said transactional resources. Alternatively, or in addition thereto, said information regarding future events may comprise planned or predicted changes to the execution environment of said transactional resources.

Alternatively, or in addition thereto, said memory may be programmable such that a user may record said information regarding the commercial or business importance of implementing said transaction on each of said resources, which may be provided to said processor for use in calculating said priority value for each resource

Alternatively, or in addition thereto, said memory may be programmable such that a user may record said information regarding the importance of implementing said transaction on each of said transactional resources to the overall functioning of the network, which may be provided to said processor for use in calculating said priority value for each transactional resource.

Brief description of the drawings

An embodiment of the present invention will now be described by way of example only and with reference to the accompanying drawings, in which:

Figure 1 is an architectural view of a telecommunications network, shown in an initial configuration prior to a transaction in Figure 1(a) and a final configuration in Figure 1(b) following the transaction;

Figure 2 is architectural view three network resources belonging to the network of Figure 1, shown in the initial configuration in Figure 2(a), an intermediate configuration in Figure 2(b) and a final configuration in Figure 2(c);

Figure 3 is a schematic illustration of a Network Management System comprising a transaction manager in accordance with an embodiment of the present invention;

Figure 4 is a schematic illustration of a previous transaction component of the transaction manager of Figure 3;

Figure 5 is a schematic illustration of the management relationship between the Network Management System of Figure 3 and the network resources of Figure 2;

Figure 6 is a flow diagram illustrating a method in accordance with an embodiment the present invention for managing the transaction implemented on the network resources of Figure 2;

Detailed description

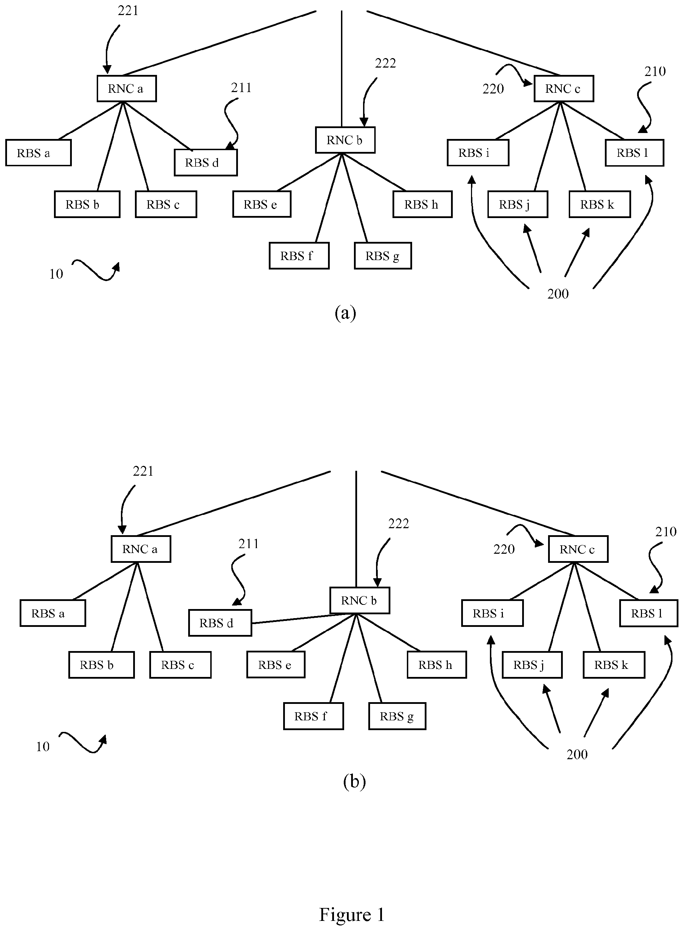

With reference to Figures 1 to 4 of the drawings, there is provided a telecommunications network 10 comprising a Network Management System (NMS) 100 and a plurality of network elements 200, each element comprising a transactional resource. The particular illustrated embodiment relates to a wireless radio access network of the 3G standard, but it will be appreciated that the present invention is applicable to other telecommunications and data communications networks.

In a wireless radio access network of the 3G standard, network elements of Radio Base Station (RBS) type 210 are tasked, amongst other things, with establishing and holding the physical wireless connection to end users' mobile devices. Network elements of Radio Network Controller (RNC) type 220 are used to co-ordinate and manage all connection-handling activities in the network 10.

As illustrated in Figure 1, the RBS and RNC network elements 210, 220 form a star-like hierarchy, with the RNC network elements 220 arranged as the "parents" of the RBS network elements 200.

The NMS 100 comprises a transaction manager 110 arranged for managing any transactions that are implemented on one or more of the transactional resources 200 of the network elements 200. In the present embodiment, the NMS 100 further comprises a memory 120, although in an alternative embodiment the memory 120 could be housed within an Element Management System (EMS) (not shown) or other network resource (not shown). Alternatively, the memory 120 could form part of the transaction manager 110.

In the illustrated embodiment, the memory 120 includes:

1) A previous transaction component 121;
2) A future event component 122;
3) A commercial and/or business importance component 123;
4) A network importance component 124.

It will, however, be appreciated that the memory 120 may include only one of the above components or two or three of the above components of stored information in any combination.

Each of the above components is discussed in more detail below.

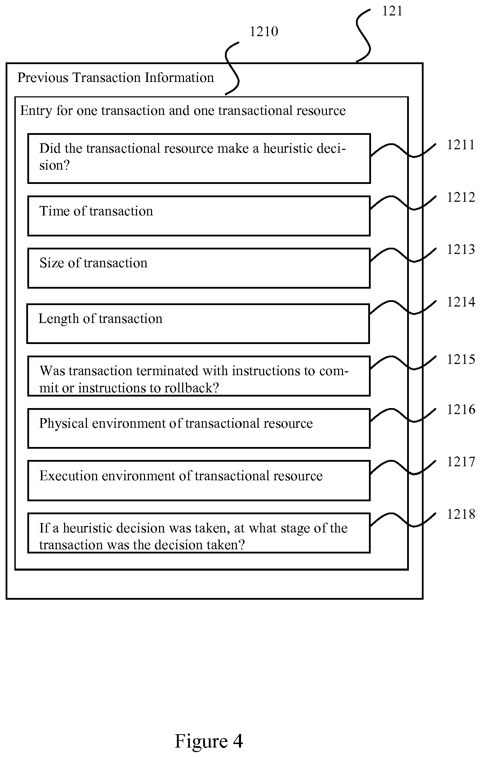

An example embodiment of the previous transaction component 121 is illustrated in detail in Figure 4, which illustrates an entry 1210 for a given transaction and a given transactional resource. With reference to this figure, the previous transaction component 121 comprises:

a) Information indicative of whether a heuristic decision was taken during said previous transaction 1211;
b) The time of said previous transaction 1212;

c) The size of said previous transaction 1213;

d) The length of said previous transaction 1214;

e) Whether said previous transaction terminated with an instruction to commit or an instruction to rollback 1215;

f) The physical environment of said transactional resource during said previous transaction 1216;

g) The run-time environment of said transactional resource during said previous transaction 1217, which may include CPU load and/or memory usage and/or file-system usage and/or software version.

h) If a heuristic decision was taken, the stage of the transaction in which the heuristic decision was taken. For example, the heuristic decision may have been taken in the prepare phase of the two-phase protocol or the commit phase of the two-phase protocol.

Whilst Figure 4 illustrates a simple example of a single entry specific to a single transaction and a single transactional resource, it will be appreciated that certain fields such as the transaction time 1212, the transaction size 1213 and the transaction length 1214 are independent of the transactional resource 200. Accordingly, a more complex data storage structure may be utilized which comprises common fields for all transactional resources 200 participating in a given transaction.

The previous transaction component 121 is a form of recordable memory and is adapted to be augmented upon the completion (successful or otherwise) of any transaction implemented on the network 10.

The future event component 122 comprises information about events certain or likely to occur in the future and certain or likely to impact on the heuristic decision-making processes of one or more of the transactional resources 200. These future events may include planned outages of said transactional resources and/or changes to the physical or execution environment of said transactional resources and/or other events. The future event component 122 is adapted to allow a user to input and/or modify information regarding future events.

The commercial and/or business importance component 123 comprises information regarding the commercial and/or business importance of implementing said transaction on the transactional resources 200. In the illustrated embodiment, one of the RNCs 220 may be located in a geographical area containing a dense population of high-value customers. Accordingly, this RNC 220 is assigned a high business/commercial importance.

The network importance component 124 comprises information regarding the importance of implementing the transaction on each transactional resource to the functioning of the network 10. For example, in the illustrated embodiment, an RBS 210 occupies a higher tier in the hierarchical network architecture than an RNC 220, and thus an RBS 210 is of greater network importance than an RNC 220.

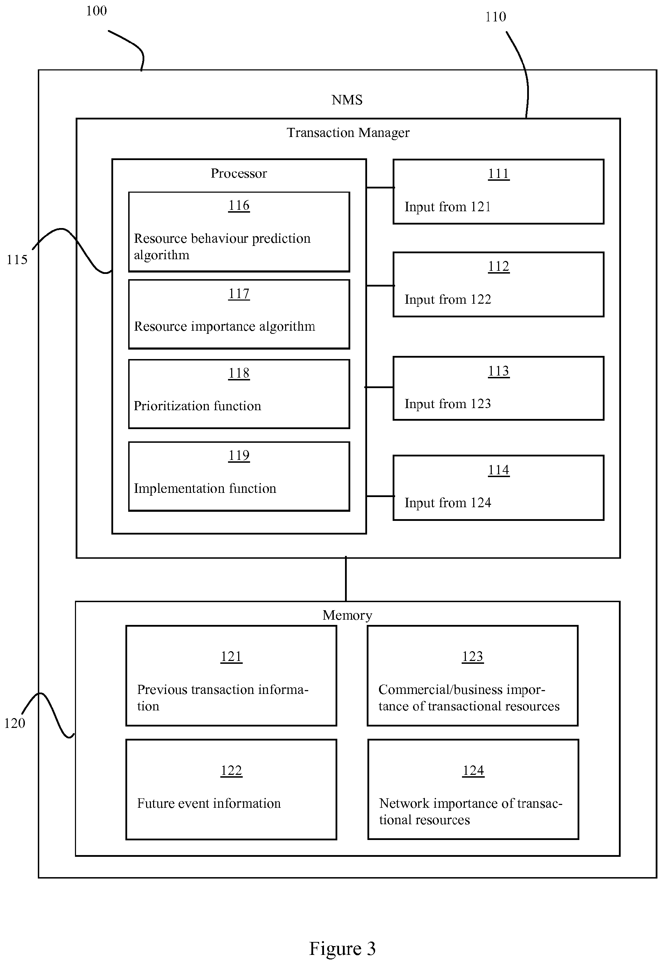

With reference to Figure 3, the transaction manager 110 includes an input for each of the four above-described memory components. In detail, the transaction manager 110 includes:

a) An input 111 for receiving information regarding previous transactions from the prior transaction portion 121 of the memory 120;

b) An input 112 for receiving information regarding future events from the future event portion 122 of the memory 120;

c) An input 113 for receiving information regarding the commercial and/or business importance of implementing the transaction on each of the transactional resources from the portion of the memory 120 containing commercial/business information 123;

d) An input 114 for receiving information regarding the network importance of implementing the transaction on each of the transactional resources from the portion of the memory containing technical/network information 124.

The transaction manager 110 further comprises a processor 115, which comprises a resource behavior prediction algorithm 116 adapted for calculating the probability that a given transactional resource 200 will make a heuristic decision during a transaction. The resource behavior prediction algorithm 116 may comprise a trend analysis algorithm and/or a pattern analysis algorithm. The resource behavior prediction algorithm 116 is adapted to receive inputs from the previous transaction component 121 and the future event component 122 of the memory 120.

The processor 115 also comprises a resource importance algorithm 117 adapted for calculating the actual or perceived importance of implementing the transaction on a given transactional resource. The resource importance algorithm 117 is adapted to receive inputs from commercial and/or business importance component 123 and the technical importance component 124 of the memory 120.

A prioritization function 118 is provided in the processor 115 for assigning a priority value to each transactional resource 200 in accordance with at least one of:

i. the probability that the transactional resource will make a heuristic decision as output from the resource behavior prediction algorithm 116;

ii. the actual or perceived importance of implementing the transaction on the transactional resource as output from the resource importance algorithm 117.

The prioritization function 118 is also adapted for ordering the transactional resources 200 in order of descending priority value once all priority values have been assigned.

Finally, the processor 115 comprises an implementation function 119 for sequentially instructing the transactional resources 200 to either commit to the transaction or to rollback the transaction in the order output from the prioritization function 118.

In a telecommunications network such as that illustrated in Figure 1 of the drawings, is often necessary to re-parent an RBS 210. This change to the network 10 should be made as part of a single transaction since the above-described ACID properties are required. For example, if the change does not comply with the ACID properties of a transaction then the RBS 210 to be re-parented could be managed by two RNCs or no RNCs, both of which would create problems for the functionality of the network 10.

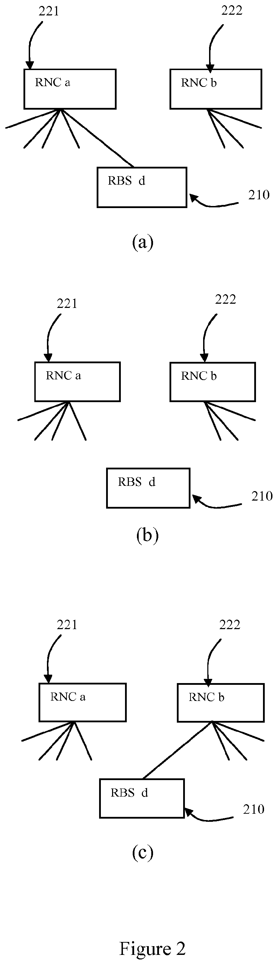

A transaction in which an RBS 210 is re-parented is illustrated in Figures 1 and 2: RBS d 211 is transferred from a first RNC (RNC a 221) to a second RNC (RNC b 222). The re-parenting requires a number of changes to be made to participating transactional resources, namely RBS d 211, RNC a 221 and RNC b 222. As more than one transactional resource 200 is involved, it is envisaged that the transaction will utilize the two-phase commit (2PC) protocol. However, it will be appreciated that the present invention does not rely on the use of the two-phase commit (2PC) protocol.

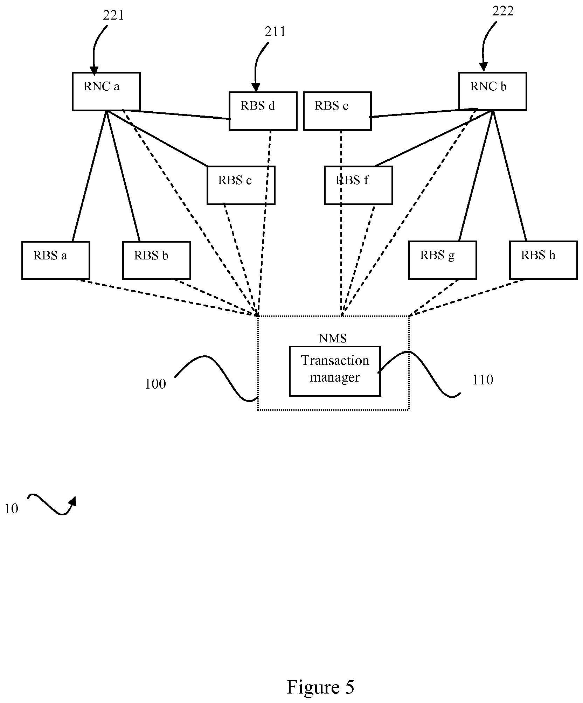

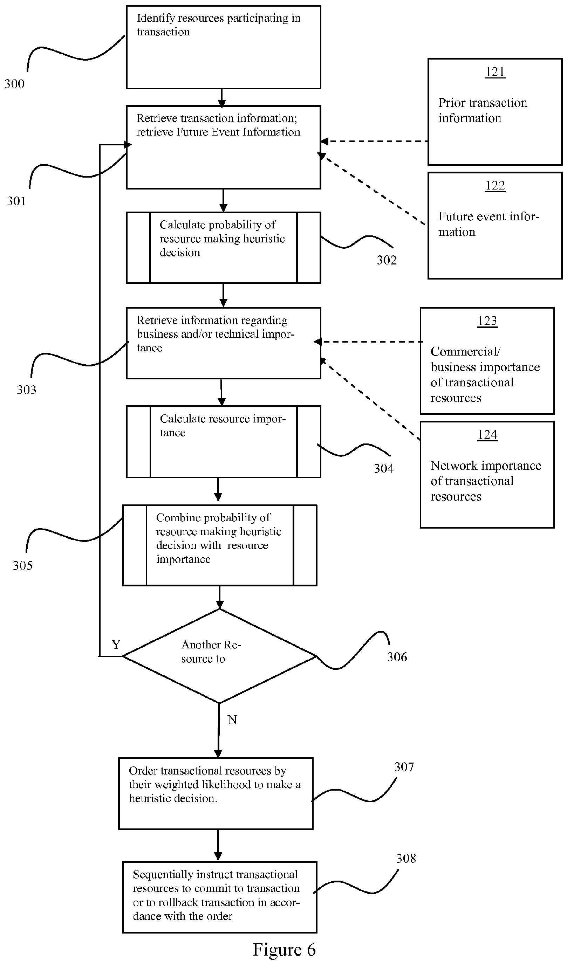

The transaction is managed by the transaction manager 110 of the Network Management System 100, which communicates with each of the transactional resources as illustrated in Figure 5. The transaction proceeds in accordance with the method illustrated in Figure 6. With reference to this figure, the transactional resources 200 upon which said transaction is to be implemented are identified in step 300, and each of the transactional resources participating in the transaction are considered in turn. For the transaction illustrated in Figure 2, RBS d 211, RNC a 221 and RNC b 222 are considered in turn. It will be appreciated, however, that the method of the present invention does not demand the consideration of all participating transactional resources, for example it is within the scope of the invention to automatically instruct all RNCs in a transaction first and then instruct RBSs in an order assigned in accordance with the method illustrated in Figure 6.

Considering the situation in which all transactional resources participating in the transaction are considered, the method may commence with the consideration of RBS d 211. In this case, the previous transaction information and future event information relevant to this transactional resource are retrieved from the respective memory components 121, 122 in step 301. As regards the previous transaction information, this information may be specific to previous transactions implemented on RBS d 211 or may include previous transactions implemented on transactional resources sharing certain characteristics with RBS d 211, for example previous transactions implemented on all RBSs 210 or all RBSs in a particular geographical location.

In step 302, the previous transaction information and future event information are analyzed and the future behavior of RBS d 211 is predicted. In particular, the probability that RBS d 211 will make a heuristic decision if asked to rollback the transaction or commit to the transaction is calculated. This may be based on analysis of:

- The times at which RBS d 211 has taken heuristic decisions in the past;
- The lengths (in units of time) of previous transactions for which RBS d 211 has taken heuristic decisions in the past;
- The sizes of transactions for which RBS d 211 has taken heuristic decisions in the past;
- The physical environment of RBS d 211 at the time at which it took heuristic decisions in the past;
- The execution environment of RBS d 211 at the time at which it took heuristic decisions in the past;
- The stage of the transaction in which RBS d 211 took heuristic decisions in the past

This analysis combined with information about the transaction to be implemented is sufficient to calculate the probability that RBS d 211 will make a heuristic decision. This information may also be combined with an analysis and extrapolation of short-term and long-term trends in the heuristic decision making of RBS d 211, for example it may be clear that RBS d 211 is becoming increasingly likely to make a heuristic decision and thus the probability that RBS d 211 will make a heuristic decision is in fact higher than that calculated using the above-described analysis alone. Furthermore, the calculation of the probability that RBS d 211 will make a heuristic decision may also be based on the behavior of similar transactional resources during previous transactions, such as all RBS resources in the same geographical location.

Steps 301 and 302 may be implemented on the resource behavior prediction algorithm 116 of the transaction manager 110.

In step 303 information regarding the commercial and/or business importance and the network importance of implementing the transaction on RBS d 211 are retrieved from the respective memory components 123, 124.

In step 304 the commercial and/or business importance and the network importance are combined to give an overall importance. For example RBS d 211 may be of considerable commercial importance due to the high-value customers that it serves, but of low network importance in view of its low hierarchical position in the network architecture. This may result in RBS d 211 being assigned an average value for actual or perceived importance.

Steps 303 and 304 may be implemented on the resource importance algorithm 117 of the transaction manager 110.

In step 305, the probability that RBS d 211 will make a heuristic decision is combined with the actual or perceived importance of implementing the transaction on RBS d 211 to give an overall priority value. For example, this may comprise weighting the probability that RBS d 211 will make a heuristic decision with the actual or perceived importance of implementing the transaction on RBS d 211. The relative weight that is assigned to the probability that RBS d 211 will make a heuristic decision and the actual or perceived importance of implementing the transaction on RBS d 211 may be programmed by a user. In an alternative embodiment of the present invention, the priority value could be derived from the probability that RBS d 211 will make a heuristic decision alone or the actual or perceived importance of implementing the transaction on RBS d 211 alone.

Once RBS d has been assigned a priority value, step 306 is to determine whether there is another transactional resource to evaluate. In the present case, the method proceeds with the repetition of steps 301 to 305 for both RNC a 221 and RNC b 222. Once RNC a 221 and RNC b 222 have been assigned a priority value, the transactional resources are sorted in accordance with their priority values in step 307. Those with the highest priority values (owing to a high likelihood of making a heuristic decision or a high importance) are positioned first in the list.

The probability that a transactional resource will make a heuristic decision is a value (number) that is computed. In one embodiment the computation is based on a formula which takes into account the probabilities computed by a number of individual algorithms (some of these are explained further below) and their weighting. The overall formula to compute the probability of a transactional resource R making a heuristic decision can be written as:

$$P(R) = ((P1 * W1) + (P2 * W2) + ... + (Pn * Wn)) * RI \qquad (E1)$$

With: P1, P2, Pn being the probability as computed by the individual algorithms; W1, W2, Wn being the relative weighting assigned to each algorithms; RI being the relative importance assigned to the resource.

Example: There are two resources R1 and R2. Algorithm 1 (trend analysis) predicts probabilities to be P1(R1) = 3%; P1(R2) = 5%. Algorithm 2 (pattern analysis) predicts probabilities to be P2(R1) = 2%; P2(R2) = 3%. No special weightings have been applied for the algorithms, so all the weightings are 1. The operator has assigned relative importance as follows: RI(R1) = 4; RI(R2) = 2 (meaning R1 is considered twice as important as R2).

Result:

$$P(R1) = ((3 *1) + (2 * 1)) * 4 = 20 \qquad (E2)$$

$$P(R2) = ((5 * 1) + (3 * 1)) * 2 = 16 \qquad (E3)$$

Therefore P(R1) > P(R2), hence resource R1 would be committed first as part of the two-phase commit.

Trend analysis algorithm mentioned above refers to monitoring the short and/or long-term trend of a certain behaviour. Given a unit of time (for example, 24 hours), an absolute number and percentage can be measured/computed that denotes a resource making a heuristic decision.

Example: On day 1, network element NE1 (which is a transactional resource in this context) was involved in 200 transactions. In 4 of these, the NE made a heuristic decision to rollback. So the total number for that day is 4, the percentage is 2%. On day 2, NE1 was involved in 200 transactions again. In 6 of these, NE1 made a heuristic decision to rollback. So the total number for that day is 6, the percentage is 3%. And so on.

Trend analysis algorithm looks at the percentage, i.e. the relative amount of occurrences when the resource makes a heuristic decision. In the example above, the values are 2% for day 1, 3% for day 2. Suppose that as data set the percentages of a number of time units are available; then it is possible to make a statement in relation to how likely, for a given time unit in the future, it is that the same transaction resource does a heuristic decision.

For example, if there is a sequence of 2%, 3%, 4%, 5% over days 1-4, then the algorithm would predict that on day 5, the likelihood of failure is 6% (irrespective of whether this comes to pass or not).

Pattern analysis algorithm is slightly different from the trend analysis algorithm discussed above. It refers to finding re-occurring patterns when measuring the relative amount of occurrences when the resource makes a heuristic decision.

Example: Suppose the unit of time for measurement is 1 hour. Each hour, the relative number (i.e. the %) of heuristic decisions made by a resource are taken. Suppose that on any given workday, for the hours 7 to 9, the value is 3%. Likewise, for the hours 17-19 the value is 3%. Outside of these hours, the value is 1%. On weekend days, the value is 1% irrespective of the time of day.

If this was to be drawn as a graph on paper, a human being would quickly identify a pattern, which is basically that during traffic rush-hours the transactional resource is 3 times more likely to make a heuristic decision than during traffic off-peak hours.

Pattern analysis algorithm identifies, without the need for human intervention, that there is a repetitive pattern here (for each seven days, on the first five of them for hours 7-9 and 17-19 the percentage triples). This then enables the algorithm to make a prediction about the future, i.e. the pattern is likely to continue.

The importance of a resource is a subjective opinion by a human being or an automated process that places a value on the resource. This typically means: How severe, in terms of impact to the network (subscribers, operator revenue, ...), is a heuristic decision made by a resource.

Example 1: In a wideband CDMA network, Radio Network Controller (RNC), 221, 222, nodes are of much higher importance than Radio Base Stations (RBS), 211, as they carry control information for much more subscribers. That is, should an RNC 221 fail, the number of subscribers affected is much higher than the number of subscribers affected should an RBS 211 fail. Therefore, an operator may decide that all transactional resources on network elements of type RNC should be assigned a relative higher value.

Example 2: In a situation where the transaction resources involved are on network elements of the same importance (here: being on two different instances of RBS), the operator may decide to always give a higher relative value to the network element instance that carries more traffic. So between the two RBS network elements, the one carrying more traffic may be assigned a higher relative value.

The algorithm works by receiving, or having received in the past, rules as those outlined above. The algorithm then considers each transactional resource and runs the rules above to arrive at relative values of importance for them.

The computation example given in formulas E1 - E3 above shows the influence of the relative importance; without it, $P(R2)$ would be larger than $P(R1)$, so R2 would be committed first as part of the two-phase commit.

Steps 305 and 307 may be implemented on the prioritization function 118 of the transaction manager 110.

Finally, the method concludes by sequentially instructing the transactional resources RBS d 211, RNC a 221 and RNC b 222 to either commit to the transaction or to rollback the transaction in step 308. If implemented in the two-phase protocol (2CP), the response given by the transactional resources RBS d 211, RNC a 221 and RNC b 222 during the prepare phase dictates whether step 308 comprises instructions to commit or instructions to roll-back. This step may comprise terminating the transaction prior to completion of instructing all transactional resources in the event that a transactional resource makes a heuristic decision.

From the foregoing therefore, it is evident that the present invention provides a simple yet effective means of reducing the likelihood of a transaction having a heuristic-mixed outcome.

**Claims**

1. A method for managing a distributed transaction, the method comprising the steps of:

      (a) identifying (300) a plurality of transactional resources (200) upon which said transaction is to be implemented;
      (b) retrieving (301) information regarding one or more previous transactions in which a heuristic decision was taken by a transactional resource and retrieving (301) information regarding future events;
      (c) calculating (302), for each transactional resource belonging to said plurality of transactional resources (200), a probability that said transactional resource will make a heuristic decision, wherein the step of calculating (302) the probability comprises analyzing the information regarding future events, and the information regarding one or more previous transactions in which a heuristic decision was taken by said transactional resource;
      (d) assigning (307) a priority value to each transactional resource belonging to said plurality of transactional resources (200), said priority value being dependent upon the probability that said transactional resource will make a heuristic decision; and
      (e) sequentially instructing (308) said plurality of transactional resources (200) to either commit to the transaction or to rollback the transaction in a descending order of said priority values of said plurality of transactional resources (200), starting with those network resources that are most likely to make a heuristic decision when instructed to either commit to the transaction or to rollback the transaction.

2. The method according to claim 1, wherein said plurality of transactional resources (200) comprises a portion but not all of the resources participating in said distributed transaction, the method further comprising the step of instructing transactional resources participating in said distributed transaction but not forming part of said plurality of transactional resources (200) to either commit to the transaction or to rollback the transaction.

3. The method according to any preceding claim, further comprising the step of:
(f) terminating step e in the event that a transactional resource belonging to said plurality of transactional resources (200) makes a heuristic decision when instructed to commit to the transaction or to rollback the transaction.

4. The method according to any preceding claim, wherein said priority value is further dependent upon an actual or perceived importance of implementing said transaction on said transactional resource.

5. The method according to any preceding claim, wherein the step of calculating (302) the probability that said transactional resource will make a heuristic decision comprises retrieving information regarding one or more previous transactions (121) implemented on said transactional resource, regardless of whether a heuristic decision was taken by said transactional resource.

6. A transaction manager (110) for managing a transaction implemented on a plurality of transactional resources (200), said transaction manager (110) comprising:

a processor (115) for identifying said plurality of transactional resources (200) upon which said transaction is to be implemented, assigning a priority value to each transactional resource belonging to said plurality of transactional resources (200), said priority value being dependent upon a probability that said transactional resource will make a heuristic decision, and sequentially instructing said plurality of transactional resources (200) to either commit to the transaction or to rollback the transaction in a descending order of said priority values of said plurality of transactional resources (200), starting with network resources that are most likely to make a heuristic decision when instructed to either commit to the transaction or to rollback the transaction, and

an input (111, 112) for retrieving information regarding one or more previous transactions in which a heuristic decision was taken by said transactional resource, retrieving information regarding future events, and providing said information to said processor (115),

wherein said processor (115) is adapted for running a process for calculating, for each transactional resource belonging to said plurality of transactional resources (200), a probability that said transactional resource will make a heuristic decision, and wherein the probability is calculated by analyzing the information regarding future events, and the information regarding one or more previous transactions in which a heuristic decision was taken by said transactional resource.

7. The transaction manager (110) according to claim 6, wherein said processor (115) is further adapted for running the process for calculating, for each transactional resource, said priority value associated with said transactional resource.

8. The transaction manager (110) according to claim 6 or 7, wherein said process comprises a trend analysis algorithm or a pattern analysis algorithm.

9. The transaction manager (110) according to any one of claims 6 to 8, wherein said process calculates an actual or perceived importance of implementing said transaction on said transactional resource.

10. The transaction manager (110) according to claim 9, further comprising an input (113, 114) for retrieving information regarding the commercial and/or business importance of implementing said transaction on said transactional resource (123) and/or information regarding the importance of implementing said transaction on said transactional resource to the overall functioning of the network (124), and providing said information to said processor (115) for use in calculating the actual or perceived importance of implementing said transaction on said transactional resource.

11. The transaction manager (110) according to any one of claims 6 to 10, wherein the transaction manager (110) forms part of a Network Management System, NMS, (100).


**Patentansprüche**

1. Verfahren zum Verwalten einer verteilten Transaktion, wobei das Verfahren die folgenden Schritte umfasst:

(a) Identifizieren (300) einer Vielzahl von Transaktionsressourcen (200), auf denen die Transaktion umgesetzt werden soll;

(b) Abrufen (301) von Informationen zu einer oder mehreren vorherigen Transaktionen, bei denen von einer Transaktionsressource eine heuristische Entscheidung getroffen wurde, und Abrufen (301) von Informationen zu künftigen Ereignissen;

(c) Berechnen (302) einer Wahrscheinlichkeit für jede zu der Vielzahl von Transaktionsressourcen (200) gehörende Transaktionsressource, dass die Transaktionsressource eine heuristische Entscheidung treffen wird, wobei der Schritt des Berechnens (302) der Wahrscheinlichkeit ein Analysieren der Informationen zu künftigen Ereignissen und der Informationen zu einer oder mehreren vorherigen Transaktionen, bei denen von der Transaktionsressource eine heuristische Entscheidung getroffen wurde, umfasst;

(d) Zuweisen (307) eines Prioritätswerts zu jeder der zu der Vielzahl von Transaktionsressourcen (200) gehörenden Transaktionsressource, wobei der Prioritätswert von der Wahrscheinlichkeit, dass die Transaktionsressource eine heuristische Entscheidung treffen wird, abhängig ist; und

(e) Anweisen (308) der Vielzahl von Transaktionsressourcen (200), nacheinander in einer absteigenden Reihenfolge der Prioritätswerte der Vielzahl von Transaktionsressourcen (200) entweder die Transaktion auszuführen oder die Transaktion rückgängig zu machen, beginnend bei jenen Netzwerkressourcen, die am wahrscheinlichsten eine heuristische Entscheidung treffen, wenn sie angewiesen werden, die Transaktion entweder auszuführen oder rückgängig zu machen.

2. Verfahren nach Anspruch 1, wobei die Vielzahl von Transaktionsressourcen (200) einen Teil, aber nicht alle an der verteilten Transaktion beteiligten Ressourcen umfasst und das Verfahren ferner den Schritt des Anweisens von an der verteilten Transaktion beteiligten Transaktionsressourcen, die aber nicht zu der Vielzahl von Transaktionsressourcen (200) gehören, die Transaktion entweder auszuführen oder rückgängig zu machen, umfasst.

3. Verfahren nach einem der vorstehenden Ansprüche, das ferner den folgenden Schritt umfasst:

(f) Beenden von Schritt e, wenn eine zu der Vielzahl von Transaktionsressourcen (200) gehörende Transaktionsressource eine heuristische Entscheidung trifft, wenn sie angewiesen wird, die Transaktion entweder auszuführen oder rückgängig zu machen.

4. Verfahren nach einem der vorstehenden Ansprüche, wobei der Prioritätswert ferner von einer tatsächlichen oder empfundenen Wichtigkeit der Umsetzung der Transaktion auf der Transaktionsressource abhängig ist.

5. Verfahren nach einem der vorstehenden Ansprüche, wobei der Schritt des Berechnens (302) der Wahrscheinlichkeit, dass die Transaktionsressource eine heuristische Entscheidung treffen wird, das Abrufen von Informationen zu einer oder mehreren vorherigen auf dieser Transaktionsressource umgesetzten Transaktionen (121) umfasst, unabhängig davon, ob von der Transaktionsressource eine heuristische Entscheidung getroffen wurde.

6. Transaktionsmanager (110) zum Verwalten einer auf einer Vielzahl von Transaktionsressourcen (200) umgesetzten Transaktion, wobei der Transaktionsmanager (110) Folgendes umfasst:

einen Prozessor (115) zum Identifizieren der Vielzahl von Transaktionsressourcen (200), auf denen die Transaktion umgesetzt werden soll, zum Zuweisen eines Prioritätswerts zu jeder Transaktionsressource, die zu der Vielzahl von Transaktionsressourcen (200) gehört, wobei der Prioritätswert von einer Wahrscheinlichkeit abhängig ist, dass diese Transaktionsressource eine heuristische Entscheidung treffen wird, und zum Anweisen der Vielzahl von Transaktionsressourcen (200), nacheinander in einer absteigenden Reihenfolge der Prioritätswerte der Vielzahl von Transaktionsressourcen (200) entweder die Transaktion auszuführen oder die Transaktion rückgängig zu machen, beginnend bei jenen Netzwerkressourcen, die am wahrscheinlichsten eine heuristische Entscheidung treffen, wenn sie angewiesen werden, die Transaktion entweder auszuführen oder rückgängig zu machen, und

eine Eingabe (111, 112) zum Abrufen von Informationen zu einer oder mehreren vorherigen Transaktionen, bei denen von der Transaktionsressource eine heuristische Entscheidung getroffen wurde, zum Abrufen von Informationen zu künftigen Ereignissen und Bereitstellen dieser Informationen für den Prozessor (115), wobei der Prozessor (115) dazu ausgelegt ist, einen Prozess zum Berechnen einer Wahrscheinlichkeit für jede zu der Vielzahl von Transaktionsressourcen (200) gehörende Transaktionsressource, dass die Transaktionsressource eine heuristische Entscheidung treffen wird, auszuführen und wobei die Wahrscheinlichkeit durch Analysieren der Informationen zu künftigen Ereignissen und der Informationen zu einer oder mehreren vorherigen Transaktionen, bei denen von der Transaktionsressource eine heuristische Entscheidung getroffen wurde, berechnet wird.

**7.** Transaktionsmanager (110) nach Anspruch 6, wobei der Prozessor (115) ferner zum Ausführen der Berechnung des zur Transaktionsressource gehörenden Prioritätswerts für jede Transaktionsressource ausgelegt ist.

**8.** Transaktionsmanager (110) nach Anspruch 6 oder 7, wobei der Prozess einen Trendanalysealgorithmus oder einen Musteranalysealgorithmus umfasst.

**9.** Transaktionsmanager (110) nach einem der Ansprüche 6 bis 8, wobei der Prozess eine tatsächliche oder empfundene Wichtigkeit des Umsetzens der Transaktion auf der Transaktionsressource berechnet.

**10.** Transaktionsmanager (110) nach Anspruch 9, ferner umfassend eine Eingabe (113, 114) zum Abrufen von Informationen zur kommerziellen und/oder geschäftlichen Wichtigkeit des Umsetzens der Transaktion auf der Transaktionsressource (123) und/oder Informationen zur Wichtigkeit des Umsetzens der Transaktion auf der Transaktionsressource für den allgemeine Funktionsweise des Netzwerks (124) und Bereitstellen dieser Informationen für den Prozessor (115) zur Verwendung beim Berechnen der tatsächlichen oder empfundenen Wichtigkeit des Umsetzens der Transaktion auf der Transaktionsressource.

**11.** Transaktionsmanager (110) nach einem der Ansprüche 6 bis 10, wobei der Transaktionsmanager (110) einen Teil eines Netzwerk-Management-Systems, NMS, (100) bildet.

**Revendications**

**1.** Procédé pour gérer une transaction distribuée, le procédé comprenant les étapes de :

(a) identification (300) d'une pluralité de ressources transactionnelles (200) sur lesquelles ladite transaction doit être implémentée ;
(b) récupération (301) d'informations concernant une ou plusieurs transactions précédentes dans lesquelles une décision heuristique a été prise par une ressource transactionnelle et récupération (301) d'informations concernant des événements futurs ;
(c) calcul (302), pour chaque ressource transactionnelle appartenant à ladite pluralité de ressources transactionnelles (200), d'une probabilité que ladite ressource transactionnelle prendra une décision heuristique, dans lequel l'étape de calcul (302) de la probabilité comprend l'analyse des informations concernant des événements futurs, et des informations concernant une ou plusieurs transactions précédentes dans lesquelles une décision heuristique a été prise par ladite ressource transactionnelle ;
(d) attribution (307) d'une valeur de priorité à chaque ressource transactionnelle appartenant à ladite pluralité de ressources transactionnelles (200), ladite valeur de priorité dépendant de la probabilité que ladite ressource transactionnelle prendra une décision heuristique ; et
(e) instruction séquentielle (308) à ladite pluralité de ressources transactionnelles (200) soit de s'engager dans la transaction, soit de démanteler la transaction par ordre décroissant desdites valeurs de priorité de ladite priorité de ressources transactionnelles (200), en démarrant avec les ressources de réseau qui sont les plus susceptibles de prendre une décision heuristique lorsqu'on leur donne l'instruction soit de s'engager dans la transaction, soit de démanteler la transaction.

**2.** Procédé selon la revendication 1, dans lequel ladite pluralité de ressources transactionnelles (200) comprend une portion mais pas la totalité des ressources participant à ladite transaction distribuée, le procédé comprenant en outre l'étape d'instruction aux ressources transactionnelles participant à ladite transaction distribuée mais ne faisant pas partie de ladite pluralité de ressources transactionnelles (200) soit de s'engager dans la transaction, soit de démanteler la transaction.

**3.** Procédé selon une quelconque revendication précédente, comprenant en outre l'étape de :
(f) fin de l'étape e dans le cas où une ressource transactionnelle appartenant à ladite pluralité de ressources transactionnelles (200) prend une décision heuristique lorsqu'on lui donne l'instruction de s'engager dans la transaction ou de démanteler la transaction.

**4.** Procédé selon une quelconque revendication précédente, dans lequel ladite valeur de priorité dépend en outre d'une importance réelle ou perçue d'implémenter ladite transaction sur ladite ressource transactionnelle.

**5.** Procédé selon une quelconque revendication précédente, dans lequel l'étape de calcul (302) de la probabilité que ladite ressource transactionnelle prendra une décision heuristique comprend la récupération d'informations concernant une ou plusieurs transactions précédentes (121) implémentées sur ladite ressource transactionnelle, indépendamment du fait qu'une décision heuristique ait été prise ou non par ladite ressource transactionnelle.

6. Gestionnaire de transaction (110) pour gérer une transaction implémentée sur une pluralité de ressources transactionnelles (200), ledit gestionnaire de transaction (110) comprenant :

un processeur (115) pour identifier ladite pluralité de ressources transactionnelles (200) sur lesquelles ladite transaction doit être implémentée, attribuer une valeur de priorité à chaque ressource transactionnelle appartenant à ladite pluralité de ressources transactionnelles (200), ladite valeur de priorité dépendant d'une probabilité que ladite ressource transactionnelle prendra une décision heuristique, et donner une instruction séquentielle à ladite pluralité de ressources transactionnelles (200) soit de s'engager dans la transaction, soit de démanteler la transaction par ordre décroissant desdites valeurs de priorité de ladite pluralité de ressources transactionnelles (200), en démarrant avec des ressources de réseau qui sont les plus susceptibles de prendre une décision heuristique lorsqu'on leur donne l'instruction soit de s'engager dans la transaction, soit de démanteler la transaction, et
une entrée (111, 112) pour récupérer des informations concernant une ou plusieurs transactions précédentes dans lesquelles une décision heuristique a été prise par ladite ressource transactionnelle, pour récupérer des informations concernant des événements futurs et pour fournir lesdites informations audit processeur (115),
dans lequel ledit processeur (115) est adapté pour exécuter un processus de calcul, pour chaque ressource transactionnelle appartenant à ladite pluralité de ressources transactionnelles (200), d'une probabilité que ladite ressource transactionnelle prendra une décision heuristique, et dans lequel la probabilité est calculée en analysant les informations concernant des événements futurs, et les informations concernant une ou plusieurs transactions précédentes dans lesquelles une décision heuristique a été prise par ladite ressource transactionnelle.

7. Gestionnaire de transaction (110) selon la revendication 6, dans lequel ledit processeur (115) est en outre adapté pour exécuter le processus de calcul, pour chaque ressource transactionnelle, de ladite valeur de priorité associée à ladite ressource transactionnelle.

8. Gestionnaire de transaction (110) selon la revendication 6 ou 7, dans lequel ledit processus comprend un algorithme d'analyse de tendance ou un algorithme d'analyse de configuration.

9. Gestionnaire de transaction (110) selon l'une quelconque des revendications 6 à 8, dans lequel ledit processus calcule une importance réelle ou perçue d'implémenter ladite transaction sur ladite ressource transactionnelle.

10. Gestionnaire de transaction (110) selon la revendication 9, comprenant en outre une entrée (113, 114) pour récupérer des informations concernant l'importance commerciale et/ou économique d'implémenter ladite transaction sur ladite ressource transactionnelle (123) et/ou des informations concernant l'importance d'implémenter ladite transaction sur ladite ressource transactionnelle pour le fonctionnement global du réseau (124), et pour fournir lesdites informations audit processeur (115) pour leur utilisation dans le calcul de l'importance réelle ou perçue d'implémenter ladite transaction sur ladite ressource transactionnelle.

11. Gestionnaire de transaction (110) selon l'une quelconque des revendications 6 à 10, dans lequel le gestionnaire de transaction (110) fait partie d'un Système de Gestion de Réseau, NMS, (100).

Figure 1

(a)

(b)

(c)

Figure 2

100

110

NMS

Transaction Manager

Processor

**116**

Resource behaviour prediction algorithm

**117**

Resource importance algorithm

**118**

Prioritization function

**119**

Implementation function

**111**

Input from 121

**112**

Input from 122

**113**

Input from 123

**114**

Input from 124

115

Memory

**121**

Previous transaction information

**122**

Future event information

**123**

Commercial/business importance of transactional resources

**124**

Network importance of transactional resources

120

Figure 3

121

1210

Previous Transaction Information

Entry for one transaction and one transactional resource

Did the transactional resource make a heuristic decision?

1211

Time of transaction

1212

Size of transaction

1213

Length of transaction

1214

Was transaction terminated with instructions to commit or instructions to rollback?

1215

Physical environment of transactional resource

1216

Execution environment of transactional resource

1217

If a heuristic decision was taken, at what stage of the transaction was the decision taken?

1218

Figure 4

221

211

222

RNC a

RBS d          RBS e

RNC b

RBS c

RBS f

RBS a          RBS b

RBS g          RBS h

NMS

Transaction
manager

100

110

10

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009292744 A
- GB 2335516 A
- US 5432926 A